# EUROPÄISCHE PATENTSCHRIFT

(11) **EP 0 695 771 B1**
(45) Veröffentlichungstag und Bekanntmachung des Hinweises auf die Patenterteilung: **08.03.2000**
(21) Anmeldenummer: 95111316.6
(22) Anmeldetag: 19.07.1995
(51) Int. Cl.: C08G 18/34, C08G 18/04, C09D 163/00

(54) **Polyisocyanat-modifizierte Dicarbonsäure(poly)anhydride**
Dicarboxylic acid (poly)anhydride modified by a polyisocyanate
(Poly)anhydride d'acide dicarboxylique modifié par du polyisocyanate

(30) Priorität: 01.08.1994 DE 4427225
(43) Veröffentlichungstag der Anmeldung: 07.02.1996
(73) Patentinhaber: BAYER AG, 51368 Leverkusen (DE)
(72) Erfinder: Reuter, Knud, Dr., D-47800 Krefeld (DE); Schäfer, Walter, Dr., D-42799 Leichlingen (DE); Müller, Hanns Peter, Dr., D-51519 Odenthal (DE); Meier-Westhues, Hans-Ulrich, Dr., D-51379 Leverkusen (DE); Kahl, Lothar, Dr., D-51465 Bergisch Gladbach (DE); Bock, Manfred, Dr., D-51375 Leverkusen (DE)

(56) Entgegenhaltungen:
- FR-A- 2 163 659
- US-A- 4 736 008

## Beschreibung

Die Erfindung betrifft Polyisocyanat-modifizierte Dicarbonsäure(poly)anhydride, ein Verfahren zu ihrer Herstellung durch Umsetzung von Carboxylgruppen aufweisenden Dicarbonsäure(poly)anhydriden mit organischen Polyisocyanaten und gegebenenfalls unteräquivalenten Mengen an organischen Verbindungen mit mit Anhydridgruppen reaktionsfähigen Amino- und/oder Hydroxylgruppen, und ihre Verwendung als Härter für Pulverlackbindemittel auf Polyepoxidharz-Basis.

Polyanhydride aliphatischer Dicarbonsäuren bzw. ihre Herstellung aus aliphatischen Dicarbonsäuren durch Umsetzung mit Essigsäureanhydrid sind bekannt (Houben-Weyl, Methoden der organischen Chemie, 4. Auflage/Erweiterungs- und Folgebände, Band E 20, Teil 2, S. 1400 bis 1402).

Ebenfalls bekannt ist die Verwendung derartiger Polyanhydride als Härter für pulverförmige Epoxidharze (DE-OS 2 261 335 oder BE-PS 819 623).

Eine für Pulverlacke besonders geeignete Polyol-Modifikation dieser Polyanhydride wird z.B. in EP-A-0 299 420 beschrieben. Ein Nachteil der in den Ausführungsbeispielen konkret beschriebenen Lacksysteme ist in den vergleichsweise hohen Einbrenntemperaturen von 163 bis 177°C zu sehen.

Die Systeme gemäß EP-A-0 509 393, die u.a. als Härter ebenfalls Dicarbonsäurepolyanhydride enthalten, weisen zwar vergleichsweise niedere Einbrenntemperaturen auf, sind jedoch zwingend auf die Verwendung ausgewählter, Epoxidgruppen aufweisender Copolymerisate mit hohem Styrolgehalt angewiesen.

Die Systeme gemäß EP-A-0 544 206, die die freien Dicarbonsäuren als Härter enthalten, weisen ebenfalls vergleichsweise niedrige Einbrenntemperaturen auf, der Nachteil von derartigen Systemen ist jedoch in ihrem vergleichsweise schlechten Verlauf zu sehen, wie dies auch im Beispielteil mit Vergleichsbeispiel 7 gezeigt wird.

Jetzt wurde überraschend gefunden, daß durch Modifikation von Carboxylgruppen aufweisenden Dicarbonsäure(poly)anhydriden mit Polyisocyanaten und gegebenenfalls mit Verbindungen mit gegenüber Anhydridgruppen reaktionsfähigen Amino- und/oder Hydroxylgruppen Härter zugänglich sind, die zusammen mit den üblichen, Epoxidgruppen aufweisenden Lackbindemitteln die Herstellung von hochwertigen Beschichtungsmitteln ermöglichen. Von besonderem Vorteil ist dabei, daß mit diesen Härtern sowohl die Vernetzungsdichte, als auch die Elastizität der Lacke erhöht wird und außerdem die Einbrenntemperatur auf 130 bis 140°C herabgesetzt werden kann.

Gegenstand der Erfindung sind unterhalb 40°C feste und oberhalb 120°C flüssige Polyisocyanat-modifizierte Dicarbonsäure(poly)anhydride, erhältlich durch Umsetzung von organischen Polyisocyanaten mit, bezüglich der NCO/COOH-Reaktion, überschüssigen Mengen an freie Carboxylgruppen aufweisenden Dicarbonsäure(poly)anhydriden und gegebenenfalls anschließende Modifizierung der Umsetzungsprodukte mit bezüglich der Anhydridgruppen unteräquivalenten Mengen an Verbindungen mit gegenüber Anhydridgruppen reaktionsfähigen Amino- und/oder Hydroxylgruppen.

Gegenstand der Erfindung sind insbesondere solche Polyisocyanat-modifizierte Dicarbonsäure(poly)anhydride, die dadurch gekennzeichnet sind, daß sie einen Gehalt an Carboxylgruppen von 0,5 bis 30 Gew.-%, an Anhydridgruppen (berechnet als C₂O₃) von 5 bis 35 Gew.-% und an Stickstoff von 0,2 bis 8 Gew.-% aufweisen und unter Abspaltung von Kohlendioxid und unter Einhaltung eines NCO/COOH-Äquivalentverhältnisses von 0,01:1 bis 0,6:1 hergestellte Umsetzungsprodukte
A) einer Anhydrid-Komponente, bestehend aus mindestens einem, gegebenenfalls im Gemisch mit bis zu 50 Gew.-%, bezogen auf das Gesamtgewicht der Komponente A), Dicarbonsäuren der Formel (I)

   HOOC-(CH₂)ₙ-COOH (I)

   vorliegenden, Dicarbonsäure(poly)anhydrid der Formel (II) 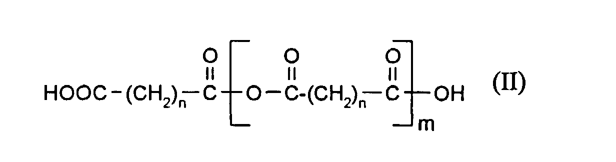 mit
B) einer Polyisocyanat-Komponente, bestehend aus mindestens einem organischen Polyisocyanat
und gegebenenfalls
C) bezüglich der Anhydridgruppen unteräquivalenten Mengen an Verbindungen mit gegenüber Anhydridgruppen reaktionsfähigen Amino- und/oder Hydroxylgruppen darstellen, wobei
- m: für eine ganze Zahl von 1 bis 100, und
- n: für eine ganze Zahl von 4 bis 16 stehen.

Gegenstand der Erfindung ist auch die Verwendung der erfindungsgemäßen Polyisocyanat-modifizierten Dicarbonsäure(poly)anhydride als Härter für Pulverlackbindemittel auf Polyepoxid-Basis.

Typische Beispiele für geeignete Dicarbonsäuren der Formel (I) sind z.B. Adipinsäure, Azelainsäure, Sebazinsäure oder 1,12-Dodecandisäure. Ganz besonders bevorzugt sind Adipinsäure und 1,12-Dodecandisäure.

Die diesen Säuren entsprechenden Anhydride der Formel (II) können in an sich bekannter Weise durch Umsetzung der entsprechenden Dicarbonsäure mit Essigsäureanhydrid bei 120 bis 150°C unter anschließender destillativer Entfernung von flüchtigen Bestandteilen aus dem Reaktionsgemisch hergestellt werden. Bei dieser Umsetzung werden die Ausgangsmaterialien in solchen Mengenverhältnissen eingesetzt, die einem Molverhältnis von Essigsäureanhydrid zu Dicarbonsäure von mindestens 0,25:1, vorzugsweise mindestens 0,5:1 und bevorzugt von 0,5:1 bis 0,9:1 entsprechen.

Als Polyisocyanatkomponente B) eignen sich beliebige organische Verbindungen, die mindestens zwei Isocyanatgruppen pro Molekül aufweisen und ansonsten unter den Reaktionsbedingungen des erfindungsgemäßen Verfahrens inert sind. Geeignet sind beispielsweise aromatische Polyisocyanate wie z.B. 2,4- und 2,6-Diisocyanatotoluol, 4,4'-Diisocyanatodiphenylmethan, sowie dessen Gemische mit seinen Isomeren und höheren Homologen, Umsetzungsprodukte von 2,4- und/oder 2,6-Diisocyanatotoluol mit niedermolekularen Polyolen wie beispielsweise Trimethylolpropan, Uretdiongruppen aufweisende Diisocyanate auf Basis von 2,4-und/oder 2,6-Diisocyanatotoluol, Isocyanuratgruppen aufweisende Polyisocyanate auf Basis dieser Diisocyanate, sowie beliebige Gemische der beispielhaft genannten aromatischen Polyisocyanate.

Bevorzugt handelt es sich bei der Polyisocyanatkomponente B) jedoch um organische Polyisocyanate mit (cyclo)aliphatisch gebundenen Isocyanatgruppen des Molekulargewichtsbereichs 168 bis 1000 wie z.B. Hexamethylendiisocyanat (HDI), Isophorondiisocyanat (IPDI), 4,4'-Diisocyanatodicyclohexylmethan oder um an sich bekannte, Biuretgruppen, Isocyanuratgruppen, Uretdiongruppen, Urethangruppen und/oder Allophanatgruppen aufweisende Derivate dieser Diisocyanate. Auch Mischtrimere aus aliphatischen und aromatischen Diisocyanaten, insbesondere aus HDI und 2,4- und/oder 2,6-Diisocyanatotoluol können als erfindungsgemäße Komponente B) eingesetzt werden. Beliebige Gemische der beispielhaft genannten Polyisocyanate können selbstverständlich ebenfalls als Komponente B) Verwendung finden.

Bei der gegebenenfalls mitzuverwendenden zusätzlichen Komponente C) handelt es sich um beliebige organische Verbindungen des Molekulargewichtsbereichs 60 bis 500, vorzugsweise 92 bis 350, die insgesamt mindestens eine, vorzugsweise mindestens zwei mit Anhydridgruppen reaktionsfähige Amino- und/oder Hydroxylgruppen pro Molekül aufweisen. Beispielhaft genannt seien Amine wie Ethylendiamin, 1,2-Diaminopropan, 1,3-Diaminopropan, 1,4-Diaminobutan, 1,5-Diaminopentan, 1,6-Diaminohexan, N,N'-Dimethylethylendiamin, Diethylentriamin, Triethylentetramin, Tetraethylenpentamin, Pentaethylenhexamin, N-Methyl-1,3-diaminopropan, 2,5-Diamino-2,5-dimethylhexan, Trimethyl-1,6-hexandiamin, Isophorondiamin, Aminoalkohole wie Ethanolamin, Diethanolamin, Propanolamin, Dipropanolamin, N-Methylethanolamin, 1-Amino-2-propanol, Diisopropanolamin, 2-Amino-2-methyl-propanol, 2-Amino-2-methyl-1,3-propandiol, 2-Amino-2-hydroxymethyl-1,3-propandiol, oder Alkohole wie Ethylenglykol, Propandiol-1,2, Propandiol-1,3, Butandiol-1,4, Butandiol-1,3, Butandiol-1,2, Butandiol-2,3, Pentandiol-1,5, Adipol(Hexandiol-1,6), Neopentylglykol, Glycerin, Trimethylolpropan, Trimethylolethan und Pentaerythrit.

Bei der Herstellung der erfindungsgemäß zu verwendenden Polyisocyanat-modifizierten Dicarbonsäure(poly)anhydride kann auf die Verwendung von vorab hergestellten Dicarbonsäure(poly)anhydriden der Formel (II) auch verzichtet werden, weil die Umsetzung von organischen Dicarbonsäuren mit Polyisocyanaten innerhalb des erfindungsgemäß relevanten Temperaturbereichs von 100 bis 180, vorzugsweise 120 bis 150°C nicht nur unter Amidbildung, sondern auch unter Bildung von Anhydridgruppen abläuft. Dies gilt allerdings speziell für den Fall der Verwendung von (cyclo)aliphatischen Polyisocyanaten B). Bei Verwendung solcher (cyclo)aliphatischen Polyisocyanate B) resultieren bei der Umsetzung stets Umsetzungsprodukte mit einem Anhydridgruppengehalt innerhalb der oben genannten Grenzen.
Vorzugsweise handelt es sich bei der Ausgangskomponente A) jedoch um Dicarbonsäure(poly)anhydride der Formel (II) bzw. um Gemische derartiger Anhydride mit den entsprechenden Dicarbonsäuren der Formel (I).

Bei der Herstellung der erfindungsgemäß zu verwendenden Polyisocyanat-modifizierten Dicarbonsäure(poly)anhydride kommt die Komponente B) in Mengen von 1 bis 55, vorzugsweise 2 bis 25 Gew.-%, bezogen auf das Gesamtgewicht der Komponenten A) und B) zum Einsatz, mit der Maßgabe, daß das NCO/COOH-Äquivalentverhältnis bei höchstens 0,6 : 1, vorzugsweise bei 0,02 :1 bis 0,4 : 1 liegt. Die gegebenenfalls mitverwendete Komponente C) kommt, falls überhaupt, in Mengen von bis zu 20 Gew.-%, bezogen auf das Gesamtgewicht der Komponenten A) und B) zum Einsatz, mit der Maßgabe, daß das Molverhältnis von Amino- und Hydroxylgruppen einerseits zu Anhydridgruppen andererseits bei höchstens 0,9 : 1, vorzugsweise bei 0 : 1 bis 0,3 : 1 liegt.

Die Umsetzung zwischen den Komponenten A) und B) erfolgt im allgemeinen in der Schmelze bei 100 bis 180, vorzugsweise 120 bis 150°C bis zur Beendigung der Kohlendioxidentwicklung. Es ist jedoch auch möglich, die Herstellung der Anhydridkomponente durch Umsetzung der entsprechenden Dicarbonsäuren mit Essigsäureanhydrid und die Umsetzung der Anhydridkomponente A) mit der Polyisocyanatkomponente B) in einer Eintopfreaktion durch Umsetzung der Dicarbonsäure mit Essigsäureanhydrid und Polyisocyanat B) bei diesen Temperaturen und anschließendes Abdestillieren von flüchtigen Bestandteilen aus dem Reaktionsgemisch durchzuführen. Im allgemeinen werden auf diese Weise Umsetzungsprodukte erhalten, die ein niedrigeres Molekulargewicht aufweisen als zweistufig hergestellte Umsetzungsprodukte aus entsprechenden Ausgangsmaterialien.

Im Falle der Mitverwendung von zusätzlichen Modifizierungskomponenten C) ist es vorteilhaft, die Modifizierungsreaktion zwischen Anhydridkomponente A) und Polyisocyanatkomponente B) zu Ende zu führen (Beendigung der Kohlendioxidentwicklung) und dann erst die Komponente C) zuzugeben. Diese zweite Modifizierungsreaktion wird vorteilhaft unter den gleichen Reaktionsbedingungen wie die erste Modifikation, d.h. innerhalb des Temperaturbereichs von 100 bis 180°C, vorzugsweise 120 bis 150°C, durchgeführt. Es ist jedoch auch möglich, zunächst die Anhydridkomponente A) mit der Komponente C) umzusetzen, und anschließend die Isocyanatmodifizierung durchzuführen. Schließlich ebenfalls möglich, jedoch keineswegs bevorzugt ist die gleichzeitige Umsetzung der Komponente A) mit den Komponenten B) und C), beispielsweise unter Verwendung von Propylenglykol als Komponente C), wobei in einem solchen Falle ebenfalls als Härter für Epoxidharze geeignete Umsetzungsprodukte entstehen, die sowohl Estergruppen (aus Anhydridgruppen und Hydroxylgruppen) als auch Urethangruppen (aus Isocyanatgruppen und Hydroxylgruppen) enthalten.

Grundsätzlich möglich, jedoch ebenfalls keinesfalls bevorzugt, ist die Mitverwendung von weiteren Modifizierungsprodukten wie beispielsweise von Monoisocyanaten, die in Mengen von 0 bis 10 Gew.-%, bezogen auf das Gesamtgewicht der Komponenten A) und B) mitverwendet werden können und in einem solchen Fall im allgemeinen in Abmischung mit der Komponente B) zum Einsatz gelangen. Geeignete Monoisocyanate sind beispielsweise Butylisocyanat, Stearylisocyanat, Cyclohexylisocyanat oder Gemische derartiger Monoisocyanate.

Die besonders bevorzugten erfindungsgemäßen Verbindungen stellen Reaktionsprodukte von 75 bis 98 Gew.-Teilen der Komponente A) mit 2 bis 25 Gew.-Teilen der Komponente B) und 0 bis 10 Gew.-Teilen der Komponente C) dar. Das Molekulargewicht der erfindungsgemäßen Verbindungen (Zahlenmittel) liegt im allgemeinen bei 500 bis 50 000, vorzugsweise 500 bis 10 000 und besonders bevorzugt bei 1 000 bis 5 000. Die Bestimmung des Molekulargewichts kann beispielsweise mittels Gelpermeationschromatographie unter Verwendung von Polystyrol als Standard erfolgen. Die erfindungsgemäß zu verwendenden Verbindungen enthalten im allgemeinen 0,5 bis 30, vorzugsweise 1,5 bis 15 Gew.-% Carboxylgruppen, 5 bis 35 Gew.-% Anhydridgruppen (berechnet als C₂O₃) und 0,2 bis 8 Gew.-% Stickstoff in Form von Amid- und gegebenenfalls auch von Harnstoffgruppen. Die erfindungsgemäßen Verbindungen stellen unterhalb 40°C feste und oberhalb 120°C flüssige Substanzen dar und eignen sich insbesondere als Härter in Pulverlacken auf Epoxidharz-Basis.

Bei dieser erfindungsgemäßen Verwendung werden die erfindungsgemäßen Härter in Pulverlackbindemitteln auf Epoxidharz-Basis eingesetzt. Die hierbei in Betracht kommenden Pulverlacke bestehen aus diesen Bindemittelkomponenten und können gegebenenfalls weitere übliche Pulverlackbestandteile wie z.B. Verlaufsmittel, Entlüftungsmittel, Katalysatoren, Pigmente, Mattierungsmittel oder UV-Schutzmittel enthalten.

Die Pulverlacke bestehen im allgemeinen aus 10 bis 50 Gew.-% an erfindungsgemäßen Härtern und zu 50 bis 90 Gew.-% aus Epoxidgruppen aufweisenden Bindemitteln, wobei sich die Summe dieser Prozentangaben auf 100 ergänzen, sowie gegebenenfalls aus zusätzlichen Hilfsmitteln der beispielhaft genannten Art.

Bevorzugte Epoxidgruppen aufweisende Bindemittelmittel sind Epoxid-funktionelle Acryl-Polymere, jedoch können auch Polyglycidylether von OH-funktionellen Polykondensaten eingesetzt werden. Die Epoxid-funktionellen Acryl-Polymere können Copolymere ethylenisch ungesättigter Ester oder Ether mit Epoxid-Gruppen, wie z.B. Glycidylacrylat, Glycidylmethacrylat oder Allylglycidylether mit anderen Estern von Acryl- und Methacrylsäure mit einwertigen C₁₋₁₈-Alkoholen und anderen Comonomeren sein. Solche Ester sind z.B. Methyl(meth)-acrylat, Ethyl(meth)acrylat, Butyl(meth)acrylat, Isobutyl(meth)acrylat, Hexyl-(meth)acrylat, 2-Ethylhexyl(meth)acrylat, Stearyl(meth)acrylat usw.

Andere mögliche Comonomere ohne Epoxidgruppen sind Styrol, α-Methylstyrol, Vinyltoluol, (Meth)Acrylnitril, Vinyl(iden)halogenide, wie Vinylchlorid, Vinylidenchlorid, Vinylester wie Vinylacetat, Vinylversatat usw.

Der Anteil der Epoxid-funktionellen Monomeren am Aufbau des Acrylpolymeren beträgt vorteilhaft etwa 5-60 Gew.-%, insbesondere 20-50 Gew.-%, bezogen auf die Gesamt-Monomermischung. Das Epoxid-Äquivalentgewicht der Epoxidgruppen aufweisenden Copolymerisate liegt im allgemeinen bei 250 bis 1000. Die Herstellung derartiger Copolymerisate ist an sich bekannt und wird beispielsweise in EP-A-0 299 420 beschrieben. Beispiele für geeignete, Epoxidgruppen aufweisende Polymerisate sind die von der Fa. Mitsui Toatsu unter den Bezeichnungen ®Almatex PD 7670 oder ®Almatex AP 3402 vertriebenen Handelsprodukte.

Die erfindungsgemäßen Härter können selbstverständlich auch in Kombination mit Epoxy-funktionellen Polykondensationsharzen zur Anwendung gelangen. Beispiele hierfür sind die an sich bekannten Umsetzungsprodukte von Epichlorhydrin mit mehrwertigen Phenolen, insbesondere Bisphenol A oder mit Novolaken auf Phenolbasis.

Die Herstellung der Pulverlacke aus den genannten Komponenten kann beispielsweise durch deren Homogenisierung in einem Extruder, Aufschmelzen und Mahlen der erstarrten Schmelze erfolgen. Der Auftrag der Pulverlacke erfolgt in an sich bekannter Weise, beispielsweise mittels einer elektrostatischen Sprüheinrichtung.

Die erfindungsgemäßen Pulverlacke weisen im allgemeinen einen Erweichungsbereich innerhalb des Temperaturbereichs von 80 bis 120°C auf. Die Härtungsbedingungen für die erfindungsgemäßen Beschichtungen liegen bei Einbrenntemperaturen von etwa 120-180°C; bevorzugt werden 130-160°C; die Einbrennzeiten liegen dann - je nach Einbrenntemperatur - zwischen 10 und 40 min, bevorzugt zwischen 15 und 30 min.

Bevorzugt werden die erfindungsgemäßen Pulverlacke für Klarlacke, besonders bevorzugt für die Decklackierung von Metallic-Lacken bei der Automobil-Erstlackierung eingesetzt.

In den nachfolgenden Beispielen beziehen sich alle Angaben in "Teilen" und in "Prozent" auf das Gewicht. Alle Reaktionen wurden unter Stickstoff als Schutzgas durchgeführt.

### Vergleichsbeispiel 1 (nach EP 299 420)

1037 Teile Dodecandisäure und 306 Teile Essigsäureanhydrid werden 2 Std. bei 125°C erhitzt; anschließend werden bei 125°C im Wasserstrahlvakuum alle flüchtigen Bestandteile abdestilliert. Unter Stickstoff werden danach 50 Teile Trimethylolpropan zugegeben und das Reaktionsgemisch 1 Std. bei 135°C umgesetzt. Evtl. vorhandene restliche flüchtigeBestandteile werden im Hochvakuum abgezogen; die zurückbleibende Schmelze erstarrt beim Abkühlen unter Stickstoff.
Schmp.: 114 - 115°C.

### Beispiel 1: (Epoxidharz-Bindemittel)

Unter Stickstoff werden 307 Teil Xylol vorgelegt und zum Rückfluß erhitzt. Hierzu wird innerhalb von 3 h ein Gemisch aus 176 Teilen Glycidylmethacrylat, 176 Teilen Methylmethacrylat, 44 Teilen Butylacrylat, 44 Teilen Styrol und 21,9 Teilen Azo-bisisobutyronitril zugetropft.

Anschließend wird noch 2 h zum Rückfluß erhitzt. Nach Abschluß dieser Nachreaktionszeit wird das Xylol im Vakuum destillativ entfernt. Das zurückbleibende epoxyfunktionelle Polymer hat einen Festkörpergehalt von 99 Gew.-% und schmilzt bei 90-100°C.

### Beispiel 2

182 Teile Sebacinsäure und 61 Teile Essigsäureanhydrid werden 2 h bei 125°C erhitzt; anschließend werden bei 125°C im Wasserstrahlvakuum alle flüchtigen Bestandteile abdestilliert. Zu der zurückbleibenden Polyanhydrid-Schmelze werden in 2 h bei 125°C 70 Teile einer 70 %igen Lösung in Methoxypropylacetat/Xylol 1:1 eines Isocyanuratgruppen aufweisenden IPDI-Trimerisats mit einem NCO-Gehalt der Lösung von 11,5 % zugetropft (CO₂-Entwicklung). Nach 1 h bei 135°C ist kein freies NCO mehr nachweisbar (IR-Spektrum). Das Lösungsmittel wird im Wasserstrahlvakuum abdestilliert.

Der Rückstand (modifiziertes Polysebacinsäureanhydrid) schmilzt bei 75-78°C, enthält 12,8 % Carboxylgruppen, 18,0 % Anhydridgruppen C₂O₃ und 2,5 % Stickstoff.

### Beispiel 3

Nach dem Verfahren von Beispiel 2 werden 182 Teile Sebacinsäure, 61 Teile Essigsäureanhydrid und 16,2 Teile Isophorondiisocyanat miteinander umgesetzt. Der isolierte, feste Vernetzer schmilzt bei 86-105°C und enthält 15,8 % Carboxylgruppen, 21,9 % Anhydridgruppen und 1,1 % Stickstoff.

### Beispiel 4

Nach dem Verfahren von Beispiel 2 werden 829 Teile Dodecandisäure, 245 Teile Essigsäureanhydrid und 65 Teile Isophorondiisocyanat miteinander umgesetzt. Der Vernetzer schmilzt bei 82-89°C und enthält 9,8 % Carboxylgruppen, 20,0 % Anhydridgruppen und 1,0 % Stickstoff.

### Beispiel 5

Nach dem Verfahren von Beispiel 2 werden 829 Teile Dodecandisäure, 245 Teile Essigsäureanhydrid und 278 Teile IPDI-Trimerisat/70 %ige Lösung entsprechend Beispiel 2 miteinander umgesetzt. Man erhält einen Vernetzer, der bei 76-81°C schmilzt. Er enthält 7,8 % Carboxylgruppen, 18,3 % Anhydridgruppen und 2,3 % Stickstoff.

### Beispiel 6

Nach dem Verfahren von Beispiel 2 werden 207 Teile Dodecandisäure, 61 Teile Essigsäureanhydrid und 32,4 Teile Isophorondiisocyanat miteinander umgesetzt. Man erhält einen festen Vernetzer, der bei 68-72°C schmilzt; Mₙ = 1000 g/mol (GPC gegen Polystyrol). Er enthält 10,4 % Carboxylgruppen, 20,0 % Anhydridgruppen und 1,8 % Stickstoff.

### Beispiel 7

Nach dem Verfahren von Beispiel 2 werden 207 Teile Dodecandisäure, 61 Teile Essigsäureanhydrid und 56,8 Teile eines handelsüblichen, Isocyanuratgruppen aufweisenden HDI-Trimerisats mit einem NCO-Gehalt von 21,5 % (®Desmodur N 3300 der Bayer AG) miteinander umgesetzt. Der erhaltene Vernetzer schmilzt bei 90-98°C; Mₙ = 2500 (GPC gegen Polystyrol). Er enthält 9,4 % Carboxylgruppen, 18,3 % Anhydridgruppen und 3,5 % Stickstoff.

### Beispiel 8

Nach dem Verfahren von Beispiel 2 werden 169 Teile Azelainsäure, 61 Teile Essigsäureanhydrid und 12,3 Teile Hexamethylendiisocyanat miteinander umgesetzt. Der erhaltene Vernetzer schmilzt bei 50-55°C. Er enthält 17,5 % Carboxylgruppen, 24,3 % Anhydridgruppen und 1,3 % Stickstoff.

### Beispiel 9

Nach dem Verfahren von Beispiel 2 werden 829 Teile Dodecandisäure, 245 Teile Essigsäureanhydrid und 49,1 Teile Hexamethylendiisocyanat miteinander umgesetzt. Der erhaltene Vernetzer schmilzt bei 88-102°C. Er enthält 10,1 % Carboxylgruppen, 23,0 % Anhydridgruppen und 1,0 % Stickstoff.

### Beispiel 10

Nach dem Verfahren von Beispiel 2 werden 142 Teile Sebacinsäure, 61 Teile Essigsäureanhydrid und 16,2 Teile Isophorondiisocyanat miteinander umgesetzt. Der erhaltene Vernetzer schmilzt bei 63-70°C. Er enthält 7,9 % Carboxylgruppen, 28,7 % Anhydridgruppen und 1,4 % Stickstoff.

### Beispiel 11

Wie in Beispiel 2 werden 142 Teile Sebacinsäure, 61 Teile Essigsäureanhydrid und 12,3 Teile Hexamethylendiisocyanat zu einem festen Vernetzer (Schmp. 80-103°C) umgesetzt. Er enthält 8,1 % Carboxylgruppen, 26,0 % Anhydridgruppen und 1,5 % Stickstoff.

### Beispiel 12

Wie in Beispiel 2 werden 725 Teile Dodecandisäure, 275 Teile Essigsäureanhydrid und 55,4 Teile Hexamethylendiisocyanat zu einem festen Vernetzer (Schmp. 75-83°C) umgesetzt. Er enthält 1,5 % Carboxylgruppen, 27,4 % Anhydridgruppen und 1,3 % Stickstoff.

### Beispiel 13

Wie in Beispiel 2 werden 161 Teile Dodecandisäure, 61 Teile Essigsäureanhydrid und 16,2 Teile IPDI zu einem festen Vernetzer (Schmp. 80-82°C) umgesetzt. Er enthält 4,0 % Carboxylgruppen, 24,0 % Anhydridgruppen und 1,2 % Stickstoff.

### Beispiel 14

161 Teile Dodecandisäure, 61 Teile Essigsäureanhydrid, 4,3 Teile Hexamethylendiisocyanat und 3,7 Teile Cyclohexylamin werden analog Beispiel 2 miteinander umgesetzt, wobei Isocyanat und Amin parallel aus verschiedenen Tropftrichtern zugetropft werden. Man erhält einen festen Pulverlackvernetzer mit Schmp. 78-84°C, Mₙ ≈ 1000 g/mol (GPC gegen Polystyrol). Er enthält 6,4 % Carboxylgruppen, 25,1 % Anhydridgruppen und 0,8 % Stickstoff.

### Beispiel 15

Wie in Beispiel 14 werden 142 Teile Sebacinsäure, 61 Teile Essigsäureanhydrid, 4,3 Teile Hexamethylendiisocyanat und 3,7 Teile Cyclohexylamin miteinander zu einem festen Vernetzer (Schmp. 89-104°C) umgesetzt. Er enthält 12,0 % Carboxylgruppen, 27,0 % Anhydridgruppen und 0,9 % Stickstoff.

### Beispiel 16

Nach dem Verfahren von Beispiel 2 werden 967 Teile Dodecandisäure, 259 Teile Essigsäureanhydrid und 26 Teile Hexamethylendiisocyanat miteinander umgesetzt. Anschließend werden in die Schmelze noch 30 Teile Trimethylolpropan zugegeben und 1 h bei 135°C umgesetzt. Der entstandene Pulverlackvernetzer schmilzt bei 110-112°C, Mₙ (GPC gegen Polystyrol) = 1000. Er enthält 18,4 % Carboxylgruppen, 14,4 % Anhydridgruppen und 0,5 % Stickstoff.

### Beispiel 17

Unter Stickstoff werden 1000 Teile Dodecandisäure mit 200 Teilen (®Desmodur N 3300) und 900 Teilen Acetanhydrid auf 125°C aufgeheizt und 4 Stdn. bei dieser Temperatur nachgerührt. Anschließend wird bei 20 mbar die entstandene Essigsäure im schwachen N₂-Strom abdestilliert. Das Produkt schmilzt bei 78-80°C und zeigt im IR-Spektrum keine NCO-Bande; Mₙ = 1610 g/mol, (GPC gegen Polystyrol). Er enthält 2,5 % Carboxylgruppen, 28,5 % Anhydridgruppen und 3,0 % Stickstoff.

### Beispiel 18

Nach dem Verfahren von Bsp. 17 werden 1000 Teile Dodecandisäure, 200 Teile eines Hexamethylendiisocyanat-Trimeren mit einem NCO-Gehalt von 21 % (®Desmodur N 3300) und 240 Teile Acetanhydrid miteinander umgesetzt. Man erhält einen Vernetzer, der bei 84-104°C schmilzt; Mₙ = 1270 g/mol, (GPC gegen Polystyrol). Er enthält 16 % Carboxylgruppen, 15 % Anhydridgruppen und 1,3 % Stickstoff.

### Beispiel 19

1900 Teile Dodecandisäure und 490 Teile Acetanhydrid werden bei 125°C am Rückfluß gehalten. Anschließend wird im Wasserstrahlvakuum die entstandene Essigsäure abdestilliert.

100 Teile ®Desmodur N 3300 werden zugegeben und die Mischung wird 1 h bei 125°C nachgerührt. Anschließend wird noch für 0,5 h Vakuum (0,3 mbar) angelegt. Das Produkt hat einen Schmelzpunkt von 101-107°C. Er enthält 15,1 % Carboxylgruppen, 18,3 % Anhydridgruppen und 0,8 % Stickstoff.

### Beispiel 20

Unter Stickstoff werden 1035 Teile Dodecandisäure mit 306 Teilen Essigsäureanhydrid bei 125°C 2 h lang gerührt. Anschließend wird die entstandene Essigsäure im Vakuum bei 0,3 mbar abgezogen.

Zu 950 g des so hergestellten Carbonsäureanhydrids werden 414 g eines Uretdiongruppen aufweisenden Diisocyanats auf IPDI-Basis mit einen NCO-Gehalt von 21 % und einem Uretdiongehalt von 5,5 % und nach Ende der CO₂-Entwicklung 20 g Propylenglykol gegeben. Die Mischung wird für eine weitere Stunde bei 120-130°C gerührt, anschließend wird das Produkt bei 0,3 mbar von restlicher Essigsäure befreit. Das Produkt hat einen Schmp. von 90-108°C. Er enthält 1,1 % Carboxylgruppen, 17,3 % Anhydridgruppen und 4,0 % Stickstoff.

### Anwendungsbeispiele

Für die Lackprüfung werden die Komponenten (s. Tab. 1) gründlich gemischt und anschließend auf einem Kneter der Fa. Buss AG, Basel, Typ PLK 46 homogenisiert. Dabei betrug die Gehäusetemperatur 40°C im Einzugsbereich und 50°C im Verfahrensteil. Die Kneterwelle lief mit 150 U/min. Zur Erzielung optimaler Durchmischung wurde 2 x extrudiert. Die erstarrten Schmelzen wurden mittels einer Sichtermühle, Typ ACM 2, der Fa. Hosokawa-Mikropul, Köln zu Pulverlacken mit einer Teilchengröße < 90 µm gemahlen. Mit einer Elektrostatik-Becherpistole der Fa. ESB wurden die Pulverlacke auf entfettete Stahlbleche gesprüht. Dabei lag eine Hochspannung von 70 kV(-) an. Die Aushärtung erfolgte in 30' auf einem Gradientenofen der Fa. Byk bei 130°/140°/150°/160°C. Die anwendungstechnischen Daten werden in Tabelle 2 mitgeteilt.

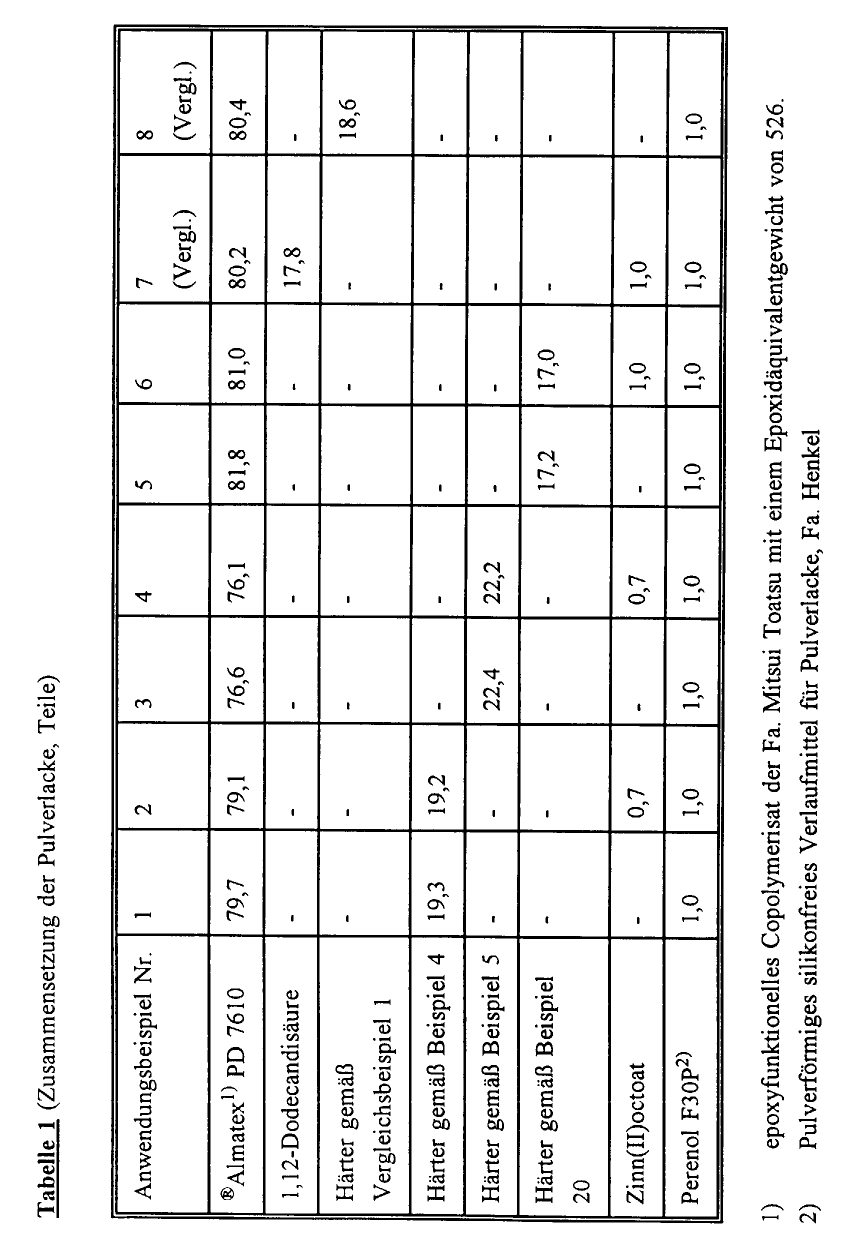

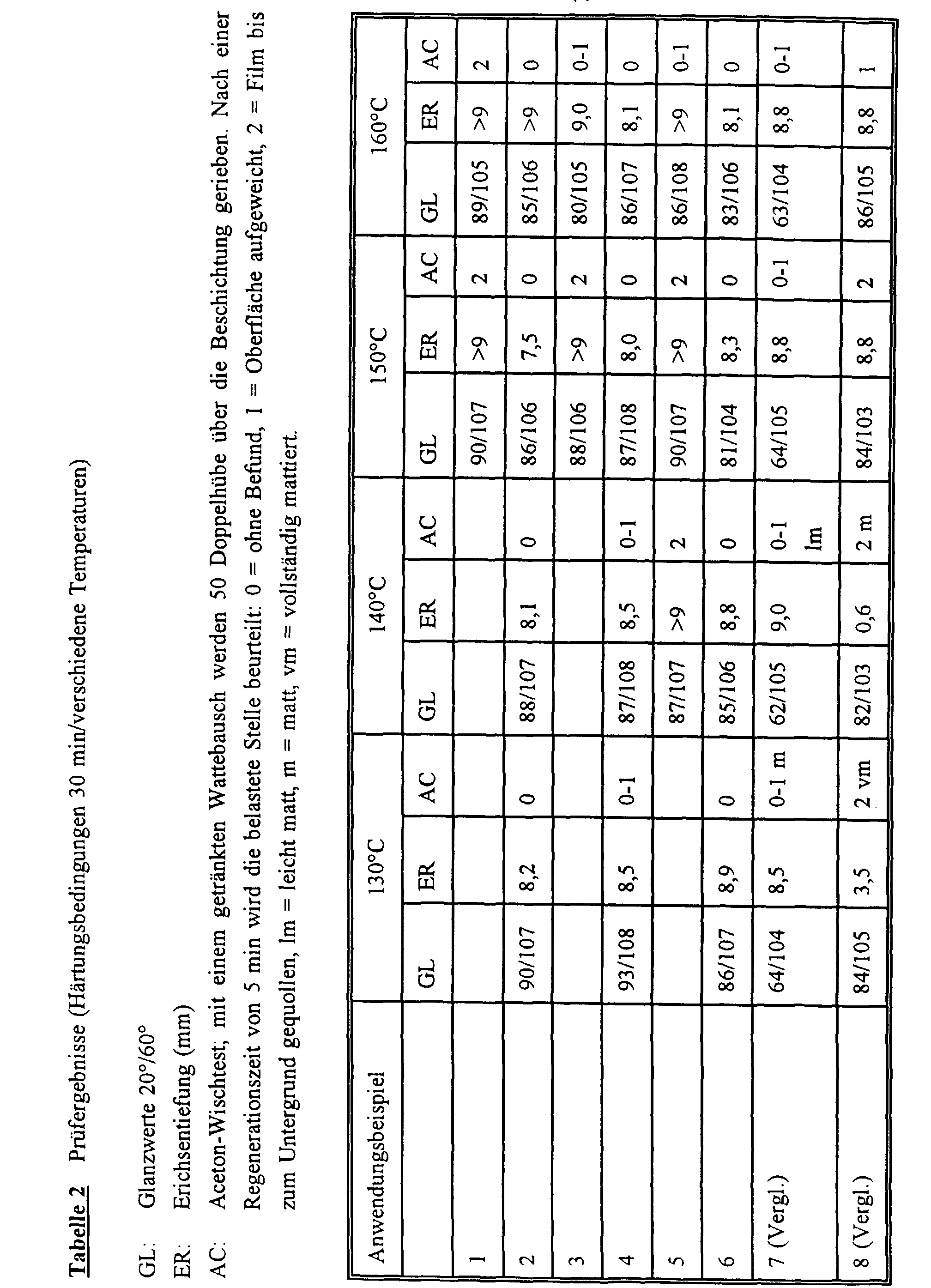

## Patentansprüche

1. Unterhalb 40°C feste und oberhalb 120°C flüssige Polyisocyanat-modifizierte Dicarbonsäure(poly)anhydride, erhältlich durch Umsetzung von organischen Polyisocyanaten mit, bezüglich der NCO/COOH-Reaktion, überschüssigen Mengen an freie Carboxylgruppen aufweisenden Dicarbonsäure(poly)anhydriden und gegebenenfalls anschließende Modifizierung der Umsetzungsprodukte mit bezüglich der Anhydridgruppen unteräquivalenten Mengen an Verbindungen mit gegenüber Anhydridgruppen reaktionsfähigen Amino- und/oder Hydroxylgruppen.

2. Polyisocyanat-modifizierte Dicarbonsäure(poly)anhydride, dadurch gekennzeichnet, daß sie einen Gehalt an Carboxylgruppen von 0,5 bis 30 Gew.-%, an Anhydridgruppen (berechnet als C₂O₃) von 5 bis 35 Gew.-% und an Stickstoff von 0,2 bis 8 Gew.-% aufweisen und unter Abspaltung von Kohlendioxid und unter Einhaltung eines NCO/COOH-Äquivalentverhältnisses von 0,01:1 bis 0,6:1 hergestellte Umsetzungsprodukte
A) einer Anhydrid-Komponente, bestehend aus mindestens einem, gegebenenfalls im Gemisch mit bis zu 50 Gew.-%, bezogen auf das Gesamtgewicht der Komponente A), Dicarbonsäuren der Formel (I)
HOOC-(CH₂)ₙ-COOH (I)
vorliegenden, Dicarbonsäure(poly)anhydrid der Formel (II) 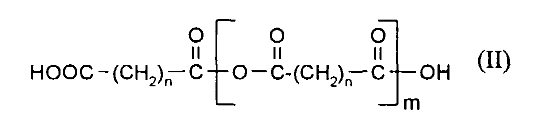 mit
B) einer Polyisocyanat-Komponente, bestehend aus mindestens einem organischen Polyisocyanat
und gegebenenfalls
C) bezüglich der Anhydridgruppen unteräquivalenten Mengen an Verbindungen mit gegenüber Anhydridgruppen reaktionsfähigen Amino- und/oder Hydroxylgruppen
darstellen, wobei
m für eine ganze Zahl von 1 bis 100, und
n für eine ganze Zahl von 4 bis 16 stehen.

3. Verwendung der Polyisocyanat-modifizierten Dicarbonsäure(poly)anhydride gemäß Anspruch 1 und 2 als Härter für Pulverlackbindemittel auf Polyepoxid-Basis.

4. Verwendung gemäß Anspruch 3 für die Automobil-Decklackierung.

5. Verwendung gemäß Anspruch 3 und 4 in Klarlacken für die Decklackierung von Metallic-Lacken bei der Automobil-Erstlackierung.

## Claims

1. Polyisocyanate-modified dicarboxylic (poly)anhydrides which are solid below 40°C and liquid above 120°C, obtainable by the reaction of organic polyisocyanates with, with regard to the NCO/COOH reaction, excess quantities of dicarboxylic (poly)anhydrides having free carboxyl groups, and optional subsequent modification of the reaction products using subequivalent quantities, with regard to the anhydride groups, of compounds having amino and/or hydroxyl groups which are reactive with anhydride groups.

2. Polyisocyanate-modified dicarboxylic (poly)anhydrides, characterised in that they have a content of carboxyl groups of 0.5 to 30 wt.%, of anhydride groups (calculated as C₂O₃) of 5 to 35 wt.% and a nitrogen content of 0.2 to 8 wt.%, and in that they are reaction products, obtained with release of carbon dioxide and with maintenance of an NCO/COOH equivalent ratio of 0.01:1 to 0.6:1,
A) of an anhydride component, consisting of at least one dicarboxylic (poly)anhydride corresponding to formula (II) 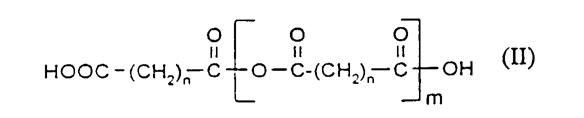 optionally present in a mixture with up to 50 wt.%, based on the total weight of component A), of dicarboxylic acids corresponding to formula (I)
HOOC- (CH₂)ₙ-COOH (I),
and
B) of a polyisocyanate component, consisting of at least one organic polyisocyanate
and optionally
C) subequivalent quantities, with regard to the anhydride groups, of compounds having amino and/or hydroxyl groups which are reactive with anhydride groups, wherein
m represents an integer from 1 to 100, and
n represents an integer from 4 to 16.

3. Use of the polyisocyanate-modified dicarboxylic (poly)anhydrides according to claim 1 and 2 as curing agents for polyepoxide binders for powder coatings.

4. Use according to claim 3 for the top coating of automobiles.

5. Use according to claim 3 and 4 in clear lacquers for the top coating of metallic lacquers in the initial coating of automobiles.

## Revendications

1. (Poly)anhydrides d'acides dicarboxyliques modifiés par des polyisocyanates, solides au-dessous de 40°C et liquides au-dessus de 120°C, qu'on obtient en faisant réagir des polyisocyanates organiques avec un défaut, pour ce qui concerne la réaction NCO/COOH, de (poly)anhydrides d'acides dicarboxyliques à groupes carboxyle libres puis, le cas échéant, en modifiant les produits de réaction à l'aide d'un défaut, par rapport aux groupes anhydrides, de composés à groupes amino et/ou hydroxy réactifs avec les groupes anhydride.

2. (Poly)anhydrides d'acides dicarboxyliques modifiés par des polyisocyanates, caractérisés en ce qu'ils contiennent de 0,5 à 30 % en poids de groupes carboxyle, de 5 à 35 % en poids de groupes anhydride (exprimé en C₂O₃) et de 0,2 à 8 % en poids d'azote et en ce qu'ils consistent en produits de réaction préparés, avec séparation de dioxyde de carbone et en maintenant un rapport de 0,01:1 à 0,6:1 entre les équivalents de NCO et les équivalents de COOH, à partir de :
A) éventuellement en mélange avec des proportions allant jusqu'à 50 % en poids, par rapport au poids total du composant A, d'acides dicarboxyliques de formule (I)
HOOC-(CH₂)ₙ-COOH (I)
un composant anhydride consistant en au moins un (poly)anhydride d'acide dicarboxylique de formule (II) 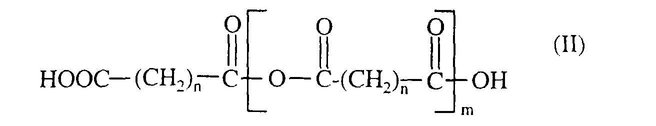 avec
B) un composant polyisocyanate consistant en au moins un polyisocyanate organique,
et le cas échéant
C) un défaut, par rapport aux groupes anhydride, de composés à groupes amino et/ou hydroxy réactifs avec les groupes anhydride,
m étant un nombre entier allant de 1 à 100 et
n un nombre entier allant de 4 à 16.

3. Utilisation des (poly)anhydrides d'acides dicarboxyliques modifiés par des polyisocyanates selon les revendications 1 et 2, en tant que durcisseurs pour des liants de vernis en poudre à base de polyépoxydes.

4. Utilisation selon la revendication 3, pour le revêtement de couverture d'automobiles.

5. Utilisation selon les revendications 3 et 4, dans des vernis clairs appliqués en revêtement de couverture sur des peintures métalliques à la peinture d'automobiles neuves.
